# EUROPEAN PATENT APPLICATION

(11) **EP 4 451 695 A1**
(43) Date of publication of application: **23.10.2024**
(21) Application number: 23188608.6
(22) Date of filing: 31.07.2023
(51) Int. Cl.: H04N 23/62, G06F 3/048, G06F 3/0484, H04N 23/63, H04N 23/667

(54) **PHOTOGRAPHING INTERFACE DISPLAY METHOD AND APPARATUS, AND STORAGE MEDIUM**

(30) Priority: 18.04.2023 CN 202310416991
(71) Applicant: Beijing Xiaomi Mobile Software Co., Ltd., Beijing 100085 (CN)
(72) Inventor: ZHAO, Yu, Beijing, 100085 (CN); DU, Junzeng, Beijing, 100085 (CN); XUN, Jiabin, Beijing, 100085 (CN); LI, Bo, Beijing, 100085 (CN); ZHU, Lei, Beijing, 100085 (CN)
(74) Representative: dompatent von Kreisler Selting Werner - Partnerschaft von Patent- und Rechtsanwälten mbB

(57) **Abstract**

The present disclosure provides a photographing interface display method and apparatus, an electronic device, and a storage medium, and relates to the field of photographing technologies. The method includes: displaying (101) a first interface corresponding to a current photographing mode, where the first interface includes a control area, and the control area includes a photographing control used to execute a photographing operation; and in response to detecting a predetermined operation on the first interface, displaying (102) a second interface, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode.

## Description

### TECHNICAL FIELD

The present disclosure relates to the field of photographing technologies, and more specifically, to a photographing interface display method and apparatus, and a storage medium.

### BACKGROUND

With the continuous development of electronic devices, more and more users are accustomed to photographing with cameras in electronic devices. Prior to photographing, users tend to set up a variety of photographing functions to capture images or videos that meet their requirements. In the related technologies, the settings of photographing functions are not easy for users to operate quickly.

### SUMMARY

The present disclosure intends to solve one of the technical problems in the related technologies at least to some extent.

According to a first aspect of the embodiments of the present disclosure, there is provided a photographing interface display method, including:
displaying a first interface corresponding to a current photographing mode, where the first interface includes a control area, and the control area includes a photographing control used to execute a photographing operation; and
in response to detecting a predetermined operation on the first interface, displaying a second interface, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode. Thus, a dynamic and context-sensitive interface for controlling a photographing operation is provided by the present invention.

Preferably, after displaying the second interface, the method further includes: in response to receiving a first operation on a first function setting control among the plurality of function setting controls, displaying the plurality of function setting controls in the first area of the second interface, wherein the first function setting control is displayed in a display style different from that before the first operation. Thus, immediate and visible feedback to a user when they interact with a function setting control in a photographing mode is provided.

Preferably, after displaying the second interface, the method further includes: in response to receiving a second operation on a second function setting control among the plurality of function setting controls, displaying a parameter setting item associated with the second function setting control in the first area of the second interface. Thus, the present invention facilitates a more efficient interaction between the user and the function setting controls by providing related parameter setting items on the interface

Preferably, after displaying the second interface, the method further includes: in response to receiving a third operation on a third function setting control among the plurality of function setting controls, displaying a plurality of target function setting controls and at least two parameter setting items associated with the third function setting control in the first area of the second interface, wherein the at least two parameter setting items are displayed in a row or column where the third function setting control is located before the third operation. Thus, this embodiment allows a user to quickly view and adjust multiple parameter setting items associated with a selected function setting control

Preferably, the plurality of target function setting controls are the same as the function setting controls at respective corresponding positions before the third operation, and the plurality of target function setting controls are inoperable. Thus, inadvertent changes to certain function setting controls while adjusting associated parameter setting items could be prevented.

Preferably, the detecting a predetermined operation on the first interface includes: in response to detecting a predetermined sliding operation on the first interface, determining that the predetermined operation on the first interface is detected; or, the first interface including an information display area in which a predetermined control is displayed, and in response to that the predetermined control is touched, determining that the predetermined operation on the first interface is detected; where the information display area is configured to display an identification corresponding to a selected function in the current photographing mode. Thus, solving the problem how to detect and interpret different user operations on the interface as commands to transition between photographing modes.

Preferably, a ratio of an overlapping area between the first area and a predetermined touch area to the first area is greater than a first threshold. Thus, a user can comfortably and efficiently interact with the function setting controls on a touch-enabled device.

Preferably, the method further includes acquiring a size corresponding to a display screen of an electronic device used for photographing and a current handheld state of the electronic device; and determining the predetermined touch area based on the size and the handheld state. Thus, the touch area of the interface based on the physical characteristics of the device and its handheld state can be adapted.

Preferably, the method further includes at least one of: in response to detecting a first dragging operation on the first area, displaying the first area at a first dragging stop position; in response to detecting a second dragging operation on a fourth function setting control among the plurality of function setting controls, and a corresponding second dragging stop position being in the first area, displaying the fourth function setting control at the second dragging stop position; and in response to detecting a scaling operation on the first area, scaling the first area. Thus, enabling a user to manipulate the layout of the function setting controls to suit their personal preferences or specific use cases.

Preferably, the plurality of function setting controls are displayed in the first area in a form of a grid, and each function setting control is displayed with one or more of an icon, a title and a usage parameter value corresponding to each function. Thus, the function setting controls in a manner that quickly conveys their purpose and current state to the user are presented.

Preferably, a plurality of photographing mode controls are displayed in the control area of the first interface, and the plurality of photographing mode controls are displayed in the control area of the second interface; or, a plurality of photographing mode controls are displayed in the control area of the first interface, and the plurality of photographing mode controls are not displayed in the control area of the second interface; wherein the plurality of photographing mode controls are adjacent to a display position of the first area on the second interface. Thus, solving the technical problem how to optimize the layout of the interface for different photographing modes by dynamically displaying or hiding the photographing mode controls.

According to a second aspect of the embodiments of the present disclosure, there is provided a photographing interface display apparatus, including:
a first display module configured to display a first interface corresponding to a current photographing mode, where the first interface includes a control area, and the control area includes a photographing control used to execute a photographing operation; and
a second display module configured to, in response to detecting a predetermined operation on the first interface, display a second interface, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode.

Preferably, the apparatus further includes a third processing module (1230) configured to: in response to receiving a third operation on a third function setting control among the plurality of function setting controls, display a plurality of target function setting controls and at least two parameter setting items associated with the third function setting control in the first area of the second interface, where the at least two parameter setting items are displayed in a row or column where the third function setting control is located before the third operation.

Preferably, the plurality of target function setting controls are the same as the function setting controls at respective corresponding positions before the third operation, and the plurality of target function setting controls are inoperable.

According to a third aspect of the embodiments of the present disclosure, there is provided a computer-readable storage medium, having stored thereon a computer program, which, when executed by a processor, implements the photographing interface display method according to the first aspect of the embodiments of the present disclosure.

The photographing interface display method and apparatus, the electronic device, and the storage medium provided by the embodiments of the present disclosure have the following beneficial effects:
in the embodiments of the present disclosure, a first interface corresponding to a current photographing mode is displayed first, where the first interface includes a control area, and the control area includes a photographing control used to execute a photographing operation, thereafter a second interface is displayed when a predetermined operation on the first interface is detected, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode. Accordingly, a plurality of function setting controls corresponding to the current photographing mode can be clearly displayed in the first area of the photographing interface, which is convenient for users to set each function through the function setting controls in the first area, so as to shoot images or videos that meet requirements, and user experience is improved.

Additional aspects and advantages of the present disclosure partially will be set forth in the description which follows, and partially will be obvious from the description which follows, or will be learned by practice of the present disclosure.

### BRIEF DESCRIPTION OF THE DRAWINGS

The above-described and/or additional aspects and advantages of the present disclosure will be apparent and easily understood from the following description of embodiments taken in conjunction with the accompanying drawings, in which:
FIG. 1 is a schematic diagram of flowchart of a photographing interface display method provided by an embodiment of the present disclosure;
FIG. 2 is a schematic diagram of a first interface provided by an embodiment of the present disclosure;
FIG. 3A is a schematic diagram of a function setting control displayed in a first area in a photographing mode provided by an embodiment of the present disclosure;
FIG. 3B is a schematic diagram of a function setting control displayed in a first area in a portrait mode provided by an embodiment of the present disclosure;
FIG. 4 is a schematic diagram of a second interface provided by an embodiment of the present disclosure;
FIG. 5 is a schematic diagram of another second interface provided by an embodiment of the present disclosure;
FIG. 6 is a schematic diagram of flowchart of a photographing interface display method provided by another embodiment of the present disclosure;
FIG. 7 is a schematic diagram of flowchart of a photographing interface display method provided by another embodiment of the present disclosure;
FIG. 7A is a schematic diagram of a display change of a first area provided by an embodiment of the present disclosure;
FIG. 8 is a schematic diagram of flowchart of a photographing interface display method provided by another embodiment of the present disclosure;
FIG. 8A is a schematic diagram of another display change of a first area provided by an embodiment of the present disclosure.
FIG. 9 is a schematic diagram of flowchart of a photographing interface display method provided by an embodiment of the present disclosure;
FIG. 10 is a schematic diagram of a predetermined touch area provided by an embodiment of the present disclosure;
FIG. 11 is a schematic diagram of flowchart of a photographing interface display method provided by an embodiment of the present disclosure;
FIG. 12 is a schematic diagram of structure of a photographing interface display apparatus provided by another embodiment of the present disclosure; and
FIG. 13 shows a block diagram of an exemplary electronic device suitable for implementing embodiments of the present disclosure.

### DETAILED DESCRIPTION

Description will now be made in detail to embodiments of the present disclosure, examples of which are illustrated in the accompanying drawings, in which the same or similar reference signs indicate the same or similar elements or elements with the same or similar functions throughout. The embodiments described below by referring to the drawings are exemplary and are intended to explain the present disclosure, and should not be construed as limitations to the present disclosure.

Hereinafter, the photographing interface display method and apparatus, the electronic device, and the storage medium of the embodiments of the present disclosure will be described with reference to the drawings.

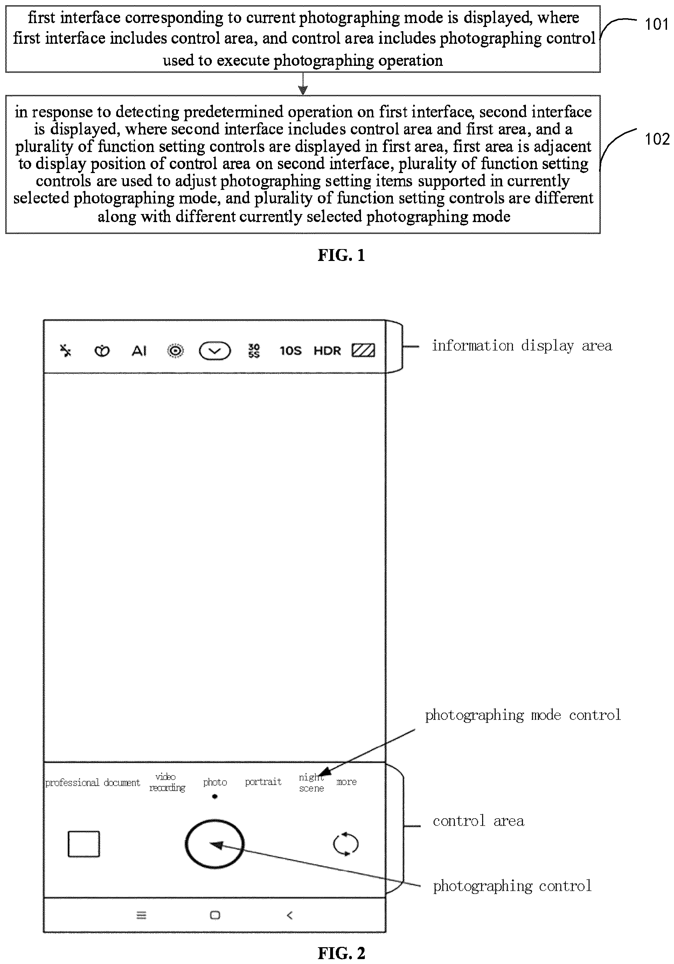

FIG. 1 is a schematic diagram of flowchart of a photographing interface display method provided by an embodiment of the present disclosure.

The embodiment of the present disclosure is illustrated with an example that the photographing interface display method is configured in a photographing interface display apparatus, and the photographing interface display apparatus can be applied to any electronic device, such that the electronic device can execute the interface display function. Specifically, the execution can be made by an application (such as a camera etc.) related to photographing in the electronic device.

As shown in FIG. 1, the photographing interface display method can include the following steps:
Step 101, a first interface corresponding to a current photographing mode is displayed, where the first interface includes a control area, and the control area includes a photographing control used to execute a photographing operation.

Herein, the current photographing mode can be a photographing mode currently selected by users, or it can also be a default photographing mode when entering the photographing application. The current photographing mode can be taking photos, portrait, video recording, etc., and the present disclosure makes no limitations thereto.

Herein, the first interface can be the interface currently displayed on a screen of the electronic device.

Herein, the photographing control can be a shutter button. A shooting picture can be obtained when the photographing control is touched.

Optionally, the control area of the first interface further includes a plurality of photographing mode controls. Herein, the photographing mode controls can include controls corresponding to different photographing modes such as taking photos, video recording, night scene, portrait etc. The users can select to trigger the needed photographing mode from the photographing mode controls based on their photographing purpose and scene.

Optionally, the control area can include a sub-area displaying a plurality of photographing mode controls, and the plurality of photographing mode controls are displayed in the sub-area in the form of a queue.

Optionally, the users can implement the corresponding photographing mode by sliding left and right in a blank area of the first interface to slide-switch the photographing mode control; alternatively, the users can implement the corresponding photographing mode by dragging a sub-area (or referred to as a navigation bar) to slide-switch the photographing mode control; alternatively, the users can single-slide the navigation bar to switch the photographing mode control one by one; and alternatively, the users can implement the switching of the photographing mode by single-clicking the photographing mode control corresponding to the photographing mode.

Optionally, the first interface includes an information display area. The information display area can be used to display an identification corresponding to a selected function in the current photographing mode. The identification corresponding to the selected function can include information such as an icon of function, a function state, a photographing parameter etc. For example, the information display area can display an on/off identification of a flash function, a picture ratio of a shot area, etc.

Herein, the control area further includes an entrance to look back at the shot image, and a camera flip control etc. The present disclosure makes no limitations thereto.

FIG. 2 is a schematic diagram of a first interface provided by an embodiment of the present disclosure, as shown in FIG. 2, the photographing mode is taking photos, the display interface is the first interface corresponding to taking photos, the control area is displayed at the bottom of the first interface, and the control area can include a photographing control.

Optionally, the control area can further include a photographing mode control, such as taking photos, video recording, night scene, portrait, etc. shown in FIG. 2. The photographing mode control can be adjacent to and above the photographing control.

Optionally, the control area can further include an entrance to look back at the shot image (as shown in FIG. 2, located on the left side of the photographing control), and a camera flip control (as shown in FIG. 2, located on the right side of the photographing control).

Optionally, as shown in FIG. 2, the top of the first interface can further include an information display area.

Step 102, in response to detecting a predetermined operation on the first interface, a second interface is displayed, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode.

Optionally, in response to detecting a predetermined sliding operation on the first interface, it is determined that a predetermined operation on the first interface is detected.

Herein, the predetermined sliding operation can be an operation of sliding from the information display area to the control area, that is, a downward sliding operation in the blank area of the first interface. It can also be a sliding operation on the photographing mode control. The present disclosure makes no limitations thereto.

Alternatively, in the case where the first interface includes an information display area and a predetermined control is displayed in the information display area, it is determined that a predetermined operation on the first interface is detected in response to that the predetermined control is touched. Herein, the information display area is used to display an identification corresponding to the selected function in the current photographing mode.

As shown in FIG. 2, the control corresponding to a pull-down arrow identification in the information display area is the predetermined control.

In the embodiments of the present disclosure, when it is detected that the predetermined control in the information display area is touched or the predetermined sliding operation is performed, it means that the users want to turn on the function setting related to the photographing mode, in order to select the function corresponding to the current photographing mode.

In the embodiments of the present disclosure, the plurality of function setting controls are different along with the different currently selected photographing mode, that is, the plurality of function setting controls displayed in the first area can be different in the different photographing mode. Optionally, in each photographing mode, the objects corresponding to the first area can also be different, and the present disclosure makes no limitations thereto.

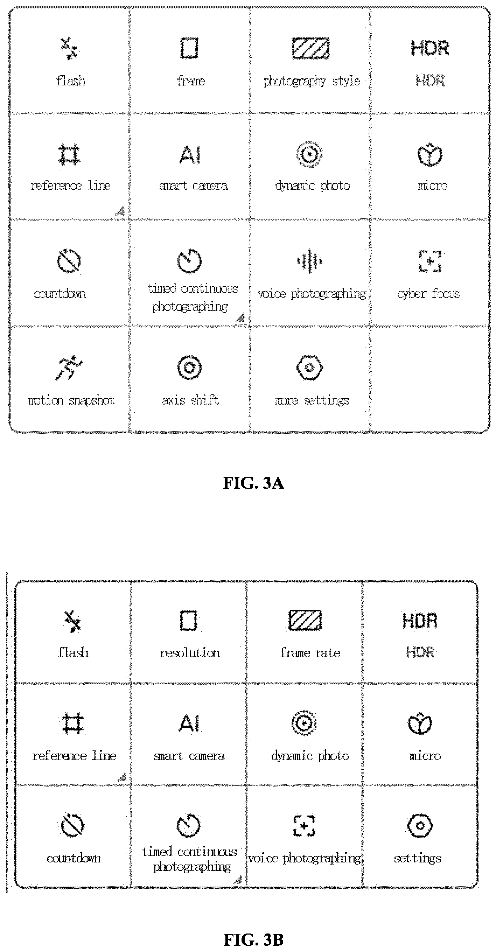

FIG. 3A is a schematic diagram of a function setting control displayed in a first area in a photographing mode provided by an embodiment of the present disclosure, as shown in FIG. 3A, the function setting controls corresponding to functions such as flash, frame, reference line, timed continuous photographing, and motion snapshot are displayed in the first area in the photographing mode. And the first

FIG. 3B is a schematic diagram of a function setting control displayed in a first area in a portrait mode provided by an embodiment of the present disclosure, as shown in FIG. 3B, the function setting controls corresponding to functions such as flash, voice control photographing, and smart camera are displayed in the first area in the portrait mode.

As shown in FIGS. 3A and 3B, a plurality of function setting controls are displayed in the first area in the form of a grid, and each function setting control is displayed with one or more of an icon, a title and usage parameter values corresponding to each function.

Herein, the icon corresponding to each function can be the image identification corresponding to each function. The title can be the name corresponding to each function, that is, the text identification. The usage parameter value can be the currently usage parameter when the function corresponds to a plurality of parameters. For example, the parameters corresponding to the countdown photographing function include 3 seconds, 5 seconds, 10 seconds, etc., and the corresponding usage parameter value can be 5 seconds when the users select to use 5 seconds.

Optionally, in the case where the control area of the first interface further includes a plurality of photographing mode controls, the control area of the second interface further includes a plurality of photographing mode controls, and the plurality of photographing mode controls are adjacent to a display position of the first area on the second interface.

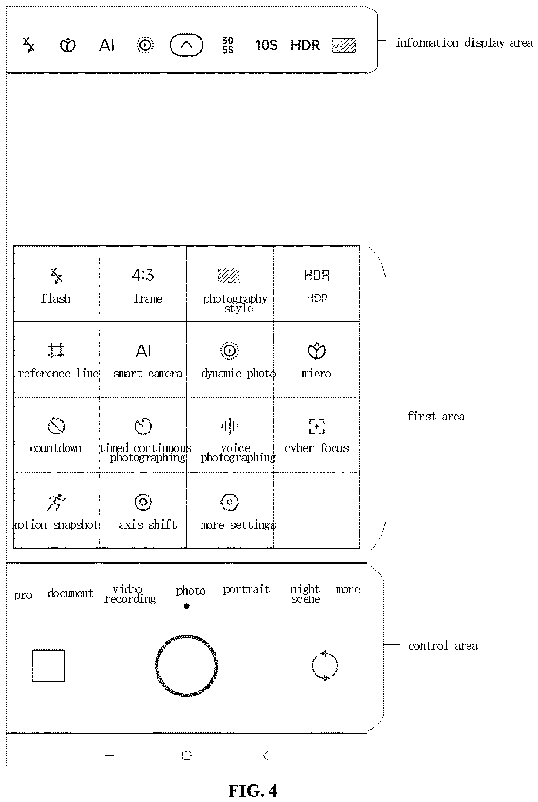

FIG. 4 is a schematic diagram of a second interface provided by an embodiment of the present disclosure. As shown in FIG. 4, the control area of the first interface displays a plurality of photographing mode controls.

Optionally, in the case where a plurality of photographing mode controls are displayed in the control area of the first interface, a plurality of photographing mode controls may not be displayed in the control area of the second interface.

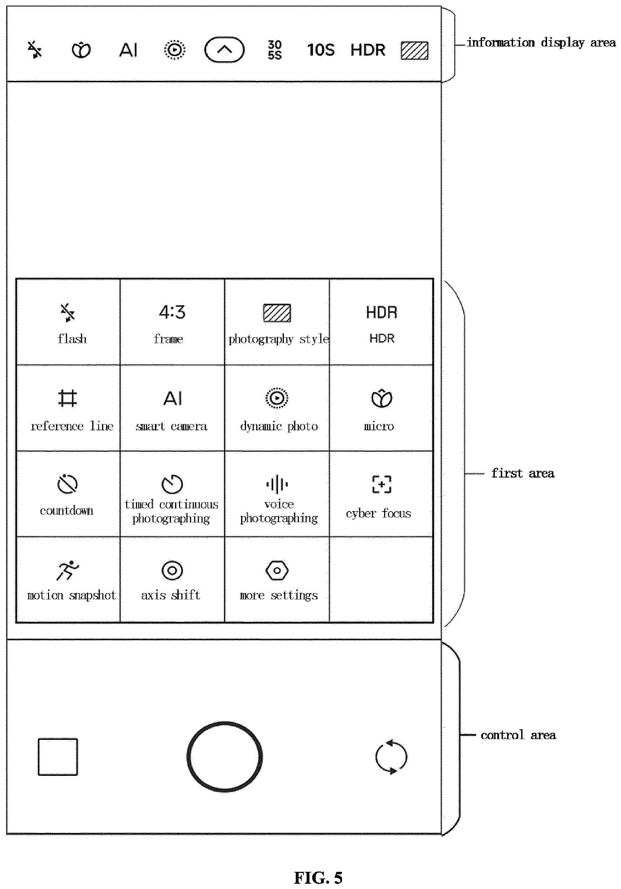

FIG. 5 is a schematic diagram of another second interface provided by an embodiment of the present disclosure, as shown in FIG. 5, a plurality of photographing mode controls are not displayed in the control area of the second interface.

As shown in FIG. 4 and FIG. 5, the second interface further includes a first area, the first area displays a plurality of function setting controls corresponding to the photographing mode, such as flash, countdown, timed continuous photographing etc. The control area is adjacent to the first area, and the first area is located above the controls. As shown in FIG. 4, herein, a plurality of photographing mode controls are adjacent to a display position of the first area on the second interface.

As shown in FIG. 4 and FIG. 5, the top of the second interface further includes an information display area.

As shown in FIG. 4 and FIG. 5, the first area does not change if the photographing mode control is not displayed on the second interface, that is, the photographing mode control is hidden. Accordingly, it can not only facilitate the users' operation and avoid the conflict between the users' operation and the sliding operation of the photographing mode, but also can imply that the function setting in the first area is a next level operation of the photographing mode in terms of the function hierarchy.

In an implementable mode, the first area can be displayed in a previous display layer of the current display layer of the framed picture. And a transparency of the first area can be set.

Optionally, when the first interface is updated to display the second interface, the first interface can be directly updated with the second interface; alternatively, the control area in the first interface may not be refreshed; alternatively, the control area of the first interface can be refreshed without refreshing the photographing control. When the photographing control is maintained to be not refreshed, a quick response when the photographing control is triggered can be realized, for example, the users can quickly click the photographing control to implement a snapshot when the snapshot is required.

In the embodiments of the present disclosure, a first interface corresponding to a current photographing mode is displayed first, where the first interface includes a control area, and the control area includes a photographing control used to execute a photographing operation, thereafter a second interface is displayed when a predetermined operation on the first interface is detected, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode. Accordingly, a plurality of function setting controls corresponding to the current photographing mode can be clearly displayed in the first area of the photographing interface, which is convenient for users to set each function through the function setting controls in the first area, in order to shoot images or videos that meet requirements, and improve user experience.

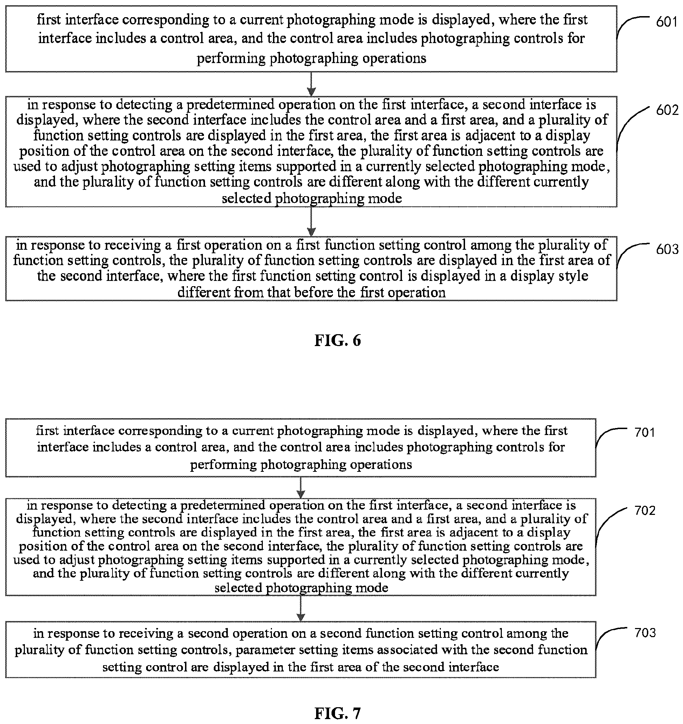

FIG. 6 is a schematic diagram of flowchart of a photographing interface display method provided by another embodiment of the present disclosure, as shown in FIG. 6, the photographing interface display method can include the following steps:
Step 601, a first interface corresponding to a current photographing mode is displayed, where the first interface includes a control area, and the control area includes photographing controls for performing photographing operations.
Step 602, in response to detecting a predetermined operation on the first interface, a second interface is displayed, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode.

Herein, as for the specific implementations of steps 601 to 602, reference can be made to the detailed description in other embodiments in the present disclosure, and details will not be described here.

Step 603, in response to receiving a first operation on a first function setting control among the plurality of function setting controls, the plurality of function setting controls are displayed in the first area of the second interface, where the first function setting control is displayed in a display style different from that before the first operation.

Exemplarily, the first function setting control can be one of the function setting controls corresponding to a first type. Herein, the first type can be a single-state type, that is, an on/off type, that is, the function setting control corresponding to the first type can only be on or off, and there is no state or parameter that can be selected. For example, a dynamic photo (the captured photo includes multi-frame images and/or ambient audio at the time of photographing), a smart camera (the AI recognition photographing function), etc.

Herein, the first operation can be a touch operation on the first function setting control, can be used to activate the function corresponding to the first function setting control, and can also be used to close the function corresponding to the first function setting control. The present disclosure makes no limitations thereto.

Herein, the display style can include one of a displayed color, a displayed font, a displayed size, etc. or a combination of multiple ones thereof. The present disclosure makes no limitations thereto. It should be noted that the display style corresponding to the on state is different from the display mode corresponding to the off state, such that the function in the on state and the function in the off state can be clearly distinguished in the function display interface.

For example, the first function setting control is in the off state before the first operation, and the corresponding display style is white, italics and font three; the first function setting control is in the on state after the first operation, and the corresponding display style is red, bold and font two. The present disclosure makes no limitations thereto.

In the embodiments of the present disclosure, a first interface corresponding to a current photographing mode is displayed first, where the first interface includes a control area, and the control area includes a photographing control used to execute a photographing operation, thereafter a second interface is displayed when a predetermined operation on the first interface is detected, where the second interface includes the control area and a first area, and a plurality of function setting controls are displayed in the first area, and then when the first operation on a first function setting control among a plurality of function setting controls is received, the plurality of function setting controls are displayed in the first area of the second interface, where the first function setting control is displayed in a display style different from that before the first operation. Accordingly, in the case of receiving the first operation on the first function setting control among the plurality of function setting controls, the first function setting control can be displayed in the first area in a display style different from that before the first operation, such that the users can know the change of the first function setting control before and after the operation, display diversity of the photographing interface is improved, and user experience is further improved.

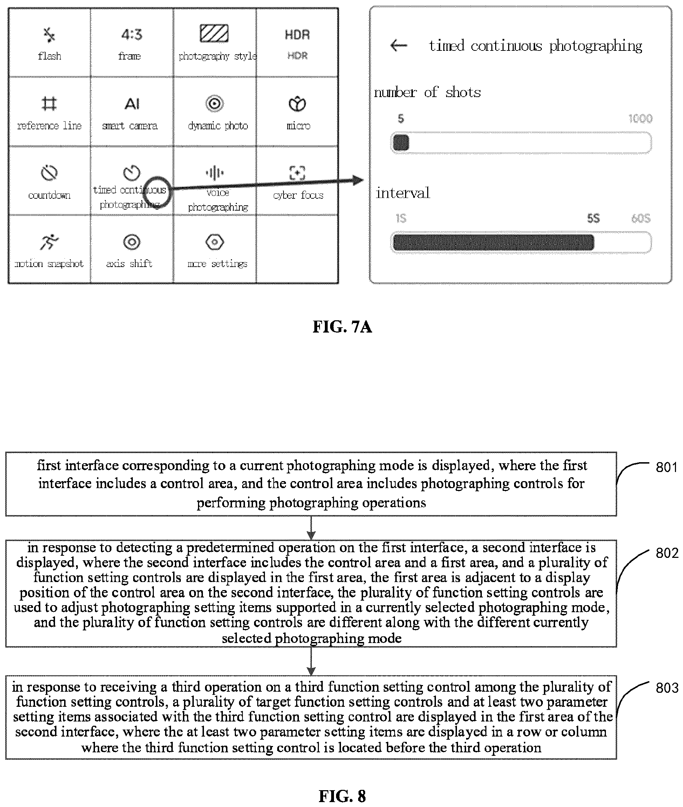

FIG. 7 is a schematic diagram of flowchart of a photographing interface display method provided by another embodiment of the present disclosure, as shown in FIG. 7, the photographing interface display method can include the following steps:
Step 701, a first interface corresponding to a current photographing mode is displayed, where the first interface includes a control area, and the control area includes photographing controls for performing photographing operations.
Step 702, in response to detecting a predetermined operation on the first interface, a second interface is displayed, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode.

Herein, as for the specific implementations of steps 701 to 702, reference can be made to the detailed description in other embodiments in the present disclosure, and details will not be described here.

Step 703, in response to receiving a second operation on a second function setting control among the plurality of function setting controls, parameter setting items associated with the second function setting control are displayed in the first area of the second interface.

Exemplarily, the second function setting control can be one of the function setting controls corresponding to a second type. Herein, the second type can be a attribute setting type, that is, the function setting control corresponding to the second type needs to set at least two attributes. For example, for the timed continuous photographing function, the corresponding attributes can include the number of consecutive shots and the time interval between two adjacent shots, etc.

Optionally, the function setting control of the second type can be identified in special forms. For example, a triangle identification (or a dot identification) is displayed in the lower right corner of the second type of function setting control. The present disclosure makes no limitations thereto.

Herein, the second operation can be a touch operation on the second function setting control, can be used to activate the corresponding function of the second function setting control, and can also be used to close (deactivate) the corresponding function of the second function setting control. The present disclosure makes no limitations thereto.

FIG. 7A is a schematic diagram of a display change of a first area provided by an embodiment of the present disclosure, as shown in FIG. 7A, the first function is the timed continuous photographing, the timed continuous photographing is the second type, and the parameter setting items associated with the timed continuous photographing can be displayed in the first area when the timed continuous photographing is turned on. Herein, the parameter setting items can be displayed in the first area in the form of a new window, and the parameter setting items can include the function currently set (timed continuous photographing), the setting of the number of shots of timed continuous photographing, the setting of the time interval of timed continuous photographing, etc.

Optionally, the parameter setting items can be displayed with a predetermined transparency on a previous display layer of a plurality of function setting controls, or the parameter setting items associated with the second function setting control can be displayed in the first area without displaying the plurality of function setting controls. The present disclosure makes no limitations thereto.

In the embodiments of the present disclosure, a first interface corresponding to a current photographing mode is displayed first, where the first interface includes a control area, and the control area includes a photographing control used to execute a photographing operation, thereafter a second interface is displayed when a predetermined operation on the first interface is detected, where the second interface includes the control area and a first area, and a plurality of function setting controls are displayed in the first area, and further, when a second operation on a second function setting control among the plurality of function setting controls is received, parameter setting items associated with the second function setting control are displayed in the first area of the second interface. Accordingly, the parameter setting items associated with the second function setting control can be displayed in the first area when a second operation on a second function setting control among the plurality of function setting controls is received, such that the users can further set in detail the functions corresponding to the second function setting control through the parameter setting items, which not only improves display diversity of the photographing interface, but also further enhances user experience.

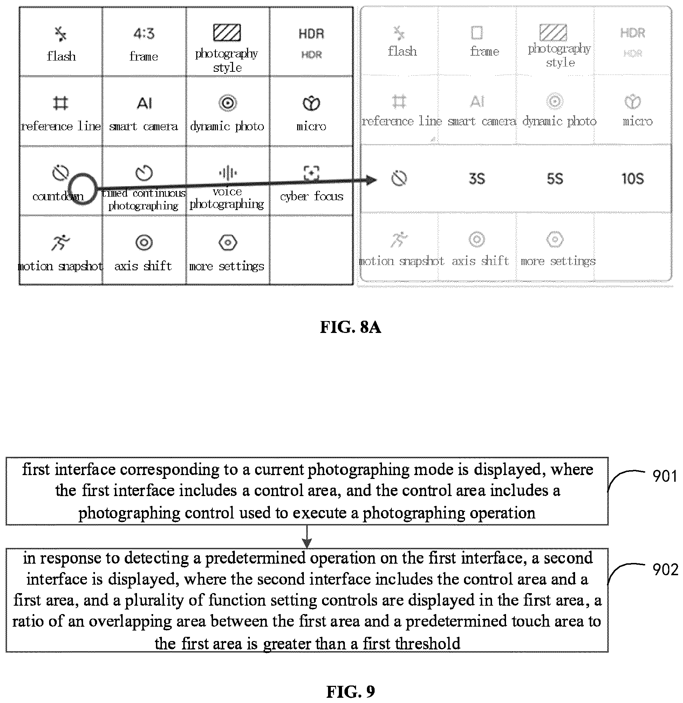

FIG. 8 is a schematic diagram of flowchart of a photographing interface display method provided by another embodiment of the present disclosure, as shown in FIG. 8, the photographing interface display method can include the following steps:
Step 801, a first interface corresponding to a current photographing mode is displayed, where the first interface includes a control area, and the control area includes photographing controls for performing photographing operations.
Step 802, in response to detecting a predetermined operation on the first interface, a second interface is displayed, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode.

Herein, as for the specific implementations of steps 801 to 802, reference can be made to the detailed description in other embodiments in the present disclosure, and details will not be described here.

Step 803, in response to receiving a third operation on a third function setting control among the plurality of function setting controls, a plurality of target function setting controls and at least two parameter setting items associated with the third function setting control are displayed in the first area of the second interface, where the at least two parameter setting items are displayed in a row or column where the third function setting control is located before the third operation.

Exemplarily, the third function setting control can be one of the function setting controls corresponding to a third type.

Herein, the third type can be a multi-state type, that is, the function corresponding to the third type has multiple states or parameters to be selected. For example, the countdown photographing function can correspond to a plurality of parameters, 3 seconds, 5 seconds, 10 seconds, which can be selected.

Herein, the third operation can be a touch operation on the third function setting control, can be used to activate the function corresponding to the third function setting control, and can also be used to close the function corresponding to the third function setting control. The present disclosure makes no limitations thereto.

Herein, the at least two parameter setting items can include an on/off setting item and parameter setting items of functions corresponding to the third function setting control. Alternatively, the at least two parameter setting items include merely the parameter setting items of functions corresponding to the third function setting control. The present disclosure makes no limitations thereto. The users can set the third function by touching any setting item of at least two parameter setting items.

Optionally, at least two parameter setting items can be displayed evenly in the row or column where the third function setting control is located before the third operation.

FIG. 8A is a schematic diagram of another display change of a first area provided by an embodiment of the present disclosure, as shown in FIG. 8A, the third function setting control is the control corresponding to the countdown photographing function, and the countdown photographing is of the second type. When the countdown photographing function is turned on, a plurality of parameter setting items corresponding to the countdown photographing function (3s, 5s and 10s in FIG. 8A) can be displayed in the row where the countdown photographing function is located before the third operation, and the on/off setting item corresponding to the countdown photographing function can also be displayed (as shown in FIG. 8A, the on/off setting item is the control located in front of 3s).

Optionally, the plurality of target function setting controls are the same as the function setting controls at respective corresponding positions before the third operation, and the plurality of target function setting controls are inoperable.

As shown in FIG. 8A, except that the function setting control in the row where the countdown photographing function is located is covered by at least two parameter setting items, the function setting control that is not covered in the first area is the target function setting control. The target function setting control does not change before and after the third operation, but after the third operation, if the target function setting control is touched, no respond is made to the touch operation, that is, the target function setting control is inoperable.

Optionally, at least two parameter setting items can be displayed on the previous layer of the target function setting control or on the same layer as the target function setting control. The present disclosure makes no limitations thereto.

In the embodiments of the present disclosure, a first interface corresponding to a current photographing mode is displayed first, where the first interface includes a control area, and the control area includes a photographing control used to execute a photographing operation, thereafter a second interface is displayed when a predetermined operation on the first interface is detected, where the second interface includes the control area and a first area, and a plurality of function setting controls are displayed in the first area, and further, after receiving the third operation on the third function setting control among the plurality of function setting controls, a plurality of target function setting controls and at least two parameter setting items associated with the third function setting control are displayed in the first area of the second interface. Accordingly, at least two parameter setting items associated with the third function setting control can be displayed in the first area when the third operation on the third function setting control among a plurality of function setting controls is received, such that the users can further set in detail the functions corresponding to the third function setting control through the at least two parameter setting items, which not only improves display diversity of the photographing interface, but also further enhances user experience.

FIG. 9 is a schematic diagram of flowchart of a photographing interface display method provided by an embodiment of the present disclosure, as shown in FIG. 9, the photographing interface display method can include the following steps:
Step 901, a first interface corresponding to a current photographing mode is displayed, where the first interface includes a control area, and the control area includes a photographing control used to execute a photographing operation.
Step 902, in response to detecting a predetermined operation on the first interface, a second interface is displayed, where the second interface includes the control area and a first area, and a plurality of function setting controls are displayed in the first area, a ratio of an overlapping area between the first area and a predetermined touch area to the first area is greater than a first threshold.

Herein, the first area is adjacent to a display position of the control area on the second interface, and the plurality of function setting controls are used to adjust photographing setting items supported in a currently selected photographing mode, and the plurality of function setting controls are different along with the different currently selected photographing mode.

Herein, the predetermined touch area can be an area that the users can easily touch with the thumb when holding the electronic device with one hand.

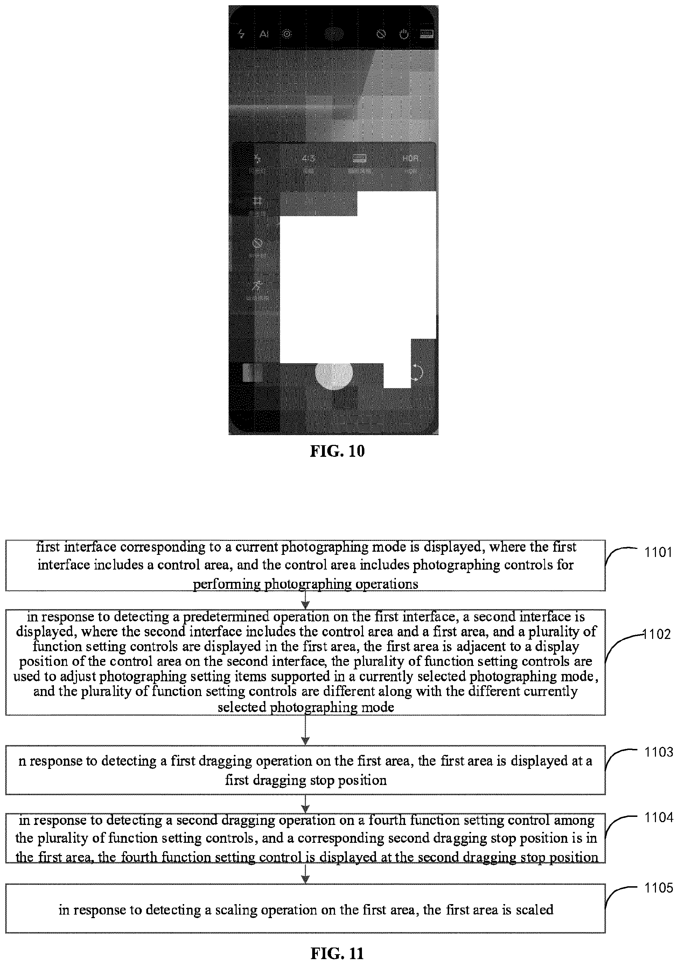

FIG. 10 is a schematic diagram of a predetermined touch area provided by an embodiment of the present disclosure, as shown in FIG. 10, the blank area is a corresponding predetermined touch area when the users hold an electronic device with the right hand.

Optionally, the predetermined touch area can be a touch area that is set in advance according to experience.

Optionally, the size corresponding to the display screen of the electronic device used for photographing and the current handheld state of the electronic device can be further obtained, and then a predetermined touch area can be determined based on the size and the handheld state, where the predetermined touch area is an area where the thumb is easy to touch in the current handheld state.

Herein, the handheld state can include that the left hand is holding from the left side of the electronic device and the right hand is holding from the left side of the electronic device. The present disclosure makes no specific limitations thereto.

It should be noted that different sizes of display screens and different handheld states of users can lead to different predetermined touch areas. Therefore, the predetermined touch area can be determined according to the size of the display screen and the handheld state.

Herein, the first threshold can be set in advance, such as 70%, 80%, etc., and the present disclosure makes no limitations thereto.

In the embodiments of the present disclosure, the ratio of the overlapping area between the first area and the predetermined touch area to the first area is greater than a first threshold. Accordingly, the first area can be displayed in the touch area which is easy for the users to operate, such that the users can operate the functions in the first area conveniently, and user experience is improved.

FIG. 11 is a schematic diagram of flowchart of a photographing interface display method provided by an embodiment of the present disclosure; as shown in FIG. 11, the photographing interface display method can include the following steps:
Step 1101, a first interface corresponding to a current photographing mode is displayed, where the first interface includes a control area, and the control area includes photographing controls for performing photographing operations.
Step 1102, in response to detecting a predetermined operation on the first interface, a second interface is displayed, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode.

Herein, as for the specific implementations of steps 1101 to 1102, reference can be made to the detailed description in other embodiments in the present disclosure, and details will not be described here.

Step 1103, in response to detecting a first dragging operation on the first area, the first area is displayed at a first dragging stop position.

In order to display the first area in an area that is easy for the users to operate, it is possible to support the first area to be dragged in the area between the information display area and the control area. And first area is displayed at the dragging stop position.

Optionally, a control or area for triggering the dragging of the first area can be set in the first area. Accordingly, the first dragging operation of the first area is triggered when a control in the first area is clicked or an area is long pressed and dragged.

Step 1104, in response to detecting a second dragging operation on a fourth function setting control among the plurality of function setting controls, and a corresponding second dragging stop position is in the first area, the fourth function setting control is displayed at the second dragging stop position.

Herein, the fourth function setting control can be any one of a plurality of function setting controls.

In order to display the function setting controls corresponding to the functions commonly used by users in the first area in an area that is easy for the users to operate, it is also possible to support the customized layout of each function setting control in the first area. That is, a second dragging operation on a fourth function setting control among a plurality of function setting controls in the first area is detected, and the corresponding second dragging stop position is in the first area, and the second function is displayed at the second dragging stop position. Accordingly, the users can arrange the function setting controls corresponding to common functions in an area convenient for their own operations.

Optionally, the second dragging operation on the fourth function setting control can be triggered by long-pressing the fourth function setting control. The present disclosure makes no specific limitations to the trigger condition for dragging the fourth function setting control.

Step 1105, in response to detecting a scaling operation on the first area, the first area is scaled.

In order to facilitate the users to operate and adjust the display size of icon, title, etc. of each function in the first area, the scaling of the first area can also be supported, that is, the size of the display area of the first area can be changed. Optionally, the display size of icon, title, etc. of each function can also be changed, while changing the size of the display area of the first area.

It should be noted that the present disclosure makes no specific limitations to the execution order of step 1103 to step 1105. One or more steps of steps 1103 to 1105 can also be performed. The present disclosure makes no limitations thereto.

In the embodiments of the present disclosure, a first interface corresponding to a current photographing mode is displayed, where the first interface includes a control area, and the control area includes a photographing control used to execute a photographing operation; a second interface is displayed in response to that a predetermined operation on the first interface is detected, where the second interface includes the control area and a first area, and a plurality of function setting controls are displayed in the first area, and the first area is displayed at a first dragging stop position in response to detecting a first dragging operation on the first area; alternatively, in response to detecting a second dragging operation on a fourth function setting control among a plurality of function setting controls and the corresponding second dragging stop position is in the first area, the fourth function setting control is displayed at the second dragging stop position, alternatively, the first area is scaled in response to detecting a scaling operation on the first area. Accordingly, the display position of the first area, the size of the first area, and position of each function setting control in the first area on the second interface can be customized, such that the users can operate the function setting control in the first area more conveniently, and user experience is improved.

In order to implement the above embodiments, the present disclosure further provides a photographing interface display apparatus.

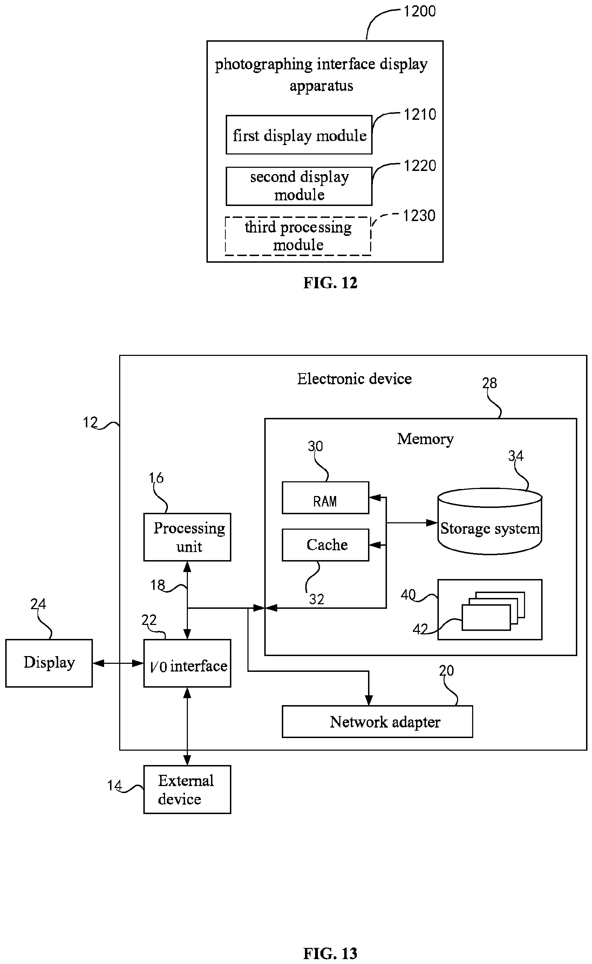

FIG. 12 is a schematic diagram of structure of a photographing interface display apparatus provided by an embodiment of the present disclosure.

As shown in FIG. 12, the photographing interface display apparatus 1200 can include a first display module 1210 and a second display module 1220.

The first display module is configured to display a first interface corresponding to a current photographing mode, where the first interface includes a control area, and the control area includes a photographing control used to execute a photographing operation.

The second display module is configured to, in response to detecting a predetermined operation on the first interface, display a second interface, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode.

Optionally, a first processing module can be further included, the first processing module is configured to:
in response to receiving a first operation on a first function setting control among the plurality of function setting controls, display the plurality of function setting controls in the first area of the second interface, where the first function setting control is displayed in a display style different from that before the first operation.

Optionally, a second processing module can be further included, the second processing module is configured to:
in response to receiving a second operation on a second function setting control among the plurality of function setting controls, display a parameter setting item associated with the second function setting control in the first area of the second interface.

Optionally, a third processing module (1230) can be further included, the third processing module is configured to:
in response to receiving a third operation on a third function setting control among the plurality of function setting controls, display a plurality of target function setting controls and at least two parameter setting items associated with the third function setting control in the first area of the second interface, where the at least two parameter setting items are displayed in a row or column where the third function setting control is located before the third operation.

Optionally, the plurality of target function setting controls are the same as the function setting controls at respective corresponding positions before the third operation, and the plurality of target function setting controls are inoperable.

Optionally, a first determining module can be further included, the first determining module is configured to:
in response to detecting a predetermined sliding operation on the first interface, determine that a predetermined operation on the first interface is detected; or,
the first interface including an information display area in which a predetermined control is included, and in response to that the predetermined control is touched, determine that a predetermined operation on the first interface is detected.

Herein the information display area is used to display an identification corresponding to a selected function in the current photographing mode.

Optionally, a ratio of an overlapping area between the first area and a predetermined touch area to the first area is greater than a first threshold.

Optionally, a second determining module can be further included, the second determining module is configured to:
acquire a size corresponding to a display screen of an electronic device used for photographing and a current handheld state of the electronic device; and
determine the predetermined touch area based on the size and the handheld state.

Optionally, a fourth processing module can be further included, the fourth processing module is configured to:
in response to detecting a first dragging operation on the first area, display the first area at a first dragging stop position;
in response to detecting a second dragging operation on a fourth function setting control among the plurality of function setting controls and the corresponding second dragging stop position is in the first area, display the fourth function setting control at the second dragging stop position; and
in response to detecting a scaling operation on the first area, scale the first area.

Optionally, the plurality of function setting controls are displayed in the first area in a form of a grid, and a respective function setting control is displayed with one or more of an icon, a title and a usage parameter value corresponding to the respective function.

Optionally, a plurality of photographing mode controls are displayed in the control area of the first interface, and the plurality of photographing mode controls are displayed in the control area of the second interface; or,
a plurality of photographing mode controls are displayed in the control area of the first interface, and the plurality of photographing mode controls are not displayed in the control area of the second interface.

Herein, the plurality of photographing mode controls are adjacent to a display position of the first area on the second interface.

As for the functions and specific implementation principles of the above-described modules in the embodiments of the present disclosure, reference can be made to the above-described method embodiments, and details will not be repeated here.

The photographing interface display apparatus in the embodiments of the present disclosure displays a first interface corresponding to a current photographing mode first, where the first interface includes a control area, and the control area includes a photographing control used to execute a photographing operation, thereafter displays a second interface when a predetermined operation on the first interface is detected, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode. Accordingly, a plurality of function setting controls corresponding to the current photographing mode can be clearly displayed in the first area of the photographing interface, which is convenient for users to set each function through the function setting controls in the first area, so as to shoot images or videos that meet the requirements, and user experience is improved.

In order to implement the above embodiments, the present disclosure further provides an electronic device, including: a memory, a processor, and a computer program which is stored in the memory and can be run on the processor, and the photographing interface display method according to the above embodiments is implemented when the processor executes the program.

In order to implement the above embodiments, the present disclosure further provides a computer-readable storage medium, in which a computer program is stored, and when the computer program is executed by a processor, the photographing interface display method proposed in the above embodiments of the present disclosure is implemented.

FIG. 13 shows a block diagram of an exemplary electronic device suitable for implementing embodiments of the present disclosure. The electronic device 12 shown in FIG. 13 is just an example, and should not bring any limitations to the function and application scope of the embodiments of the present disclosure.

As shown in FIG. 13, the electronic device 12 is represented in the form of a general-purpose computing device. Components of the electronic device 12 can include, but not limited to, one or more processors or processing units 16, a system memory 28, and a bus 18 connecting different system components (including the system memory 28 and the processing unit 16).

The bus 18 represents one or more of several types of bus architectures, including a memory bus or a memory controller, a peripheral bus, a graphics acceleration port, a processor, or a local bus using any bus architecture of a variety of bus architectures. For example, these architectures include, but not limited to, Industry Standard Architecture (hereinafter referred to as ISA) bus, Micro Channel Architecture (hereinafter referred to as MAC) bus, enhanced ISA bus, Video Electronics Standards Association (hereinafter referred to as VESA) local bus and Peripheral Component Interconnection (hereinafter referred to as PCI) bus.

The electronic device 12 typically includes a variety of computer system readable media. These media can be any available media that can be accessed by the electronic device 12, including volatile and nonvolatile media, removable and non-removable media.

The memory 28 can include a computer system readable medium in the form of a volatile memory, such as Random Access Memory (hereinafter referred to as RAM) 30 and/or a cache memory 32. The electronic device 12 can further include other removable/non-removable, volatile/nonvolatile computer system storage media. By way of example only, the storage system 34 can be used to read from and write to non-removable, nonvolatile magnetic media (not shown in FIG. 13, commonly referred to as a "hard disk drive"). Although not shown in FIG. 13, a disk drive for reading from and writing to a removable nonvolatile disk (e.g., "floppy disk") and an optical disk drive for reading from and writing to a removable nonvolatile disk (e.g., Compact Disc Read Only Memory, hereinafter referred to as CD-ROM, Digital Video Disc Read Only Memory, hereinafter referred to as DVD-ROM or other optical media) can be provided. In these cases, each drive can be connected to the bus 18 through one or more data medium interfaces. The memory 28 can include at least one program product having a set of (e.g., at least one) program modules configured to perform the functions of respective embodiments of the present disclosure.

A program/utility tool 40 with a set of (at least one) program modules 42 can be stored in the memory 28, for example. Such program modules 42 include, but not limited to, an operating system, one or more application programs, other program modules and program data, and each or some combinations of these examples can possibly include the implementation of a network environment. The program modules 42 generally execute the functions and/or methods in the embodiments described in the present disclosure.

The electronic device 12 can also communicate with one or more external devices 14 (e.g., keyboard, pointing device, display 24, etc.), and can also communicate with one or more devices that enable the users to interact with the electronic device 12, and/or communicate with any device (e.g., network card, modem, etc.) that enables the electronic device 12 to communicate with one or more other computing devices. This communication can be performed through an input/output (I/O) interface 22. Moreover, the electronic device 12 can also be connected with one or more networks (e.g., Local Area Network, hereinafter referred to as LAN; Wide Area Network, hereinafter referred to as WAN and/or a public network, such as the Internet). As shown, the network adapter 20 communicates with other modules of the electronic device 12 through the bus 18. It should be understood that although not shown in the figure, other hardware and/or software modules can be used in conjunction with the electronic device 12, including but not limited to: microcode, device drivers, redundant processing units, external disk drive arrays, RAID systems, tape drives, data backup storage systems, and the like.

The processing unit 16 executes various functional applications and data processing by running programs stored in the system memory 28, for example, to implement the methods described in the foregoing embodiments.

According to the technical solutions of the present disclosure, a first interface corresponding to a current photographing mode is displayed first, where the first interface includes a control area, and the control area includes a photographing control used to execute a photographing operation, thereafter a second interface is displayed when a predetermined operation on the first interface is detected, where the second interface includes the control area and a first area, and a plurality of function setting controls are displayed in the first area, the first area is adjacent to a display position of the control area on the second interface, the plurality of function setting controls are used to adjust photographing setting items supported in a currently selected photographing mode, and the plurality of function setting controls are different along with the different currently selected photographing mode. Accordingly, a plurality of function setting controls corresponding to the current photographing mode can be clearly displayed in the first area of the photographing interface, which is convenient for users to set each function through the function setting controls in the first area, so as to shoot images or videos that meet requirements, and user experience is improved.

In the description of this specification, descriptions referring to the terms "one embodiment", "some embodiments", "examples", "specific examples" or "some examples" mean that specific features, structures, materials or characteristics described in connection with this embodiment or example are included in at least one embodiment or example of the present disclosure. In this specification, the schematic expressions of the above terms are not necessarily aimed at the same embodiment or example. Moreover, the specific features, structures, materials or characteristics described can be combined in any one or more embodiments or examples in a suitable manner. In addition, those skilled in the art can combine and merge different embodiments or examples and features of different embodiments or examples described in this specification in the case of having no contradiction.

In addition, the terms "first" and "second" are only used for descriptive purposes, and cannot be understood as indicating or implying relative importance or implicitly indicating the number of indicated technical features. Therefore, the features defined as "first" and "second" can explicitly or implicitly include at least one of these features. In the description of the present disclosure, "a plurality of' means at least two, such as two, three, etc., unless otherwise specifically defined.

Any process or method description in the flowchart or otherwise described herein can be understood as representing a module, segment or section of code that includes one or more executable instructions for implementing customized logic functions or steps of the process, and the scope of preferred embodiments of the present disclosure includes other implementations, in which functions can be executed out of the order shown or discussed, including in a substantially simultaneous manner or in a reverse order according to the functions involved, which should be understood by those skilled in the art to which the embodiments of the present disclosure belong.

The logic and/or steps represented in the flowchart or described in other ways herein, for example, can be regarded as a sequenced list of executable instructions for realizing logical functions, and can be embodied in any computer-readable medium for use by or in combination with an instruction execution system, apparatus or device (such as a computer-based system, a system including a processor or other systems that can fetch instructions from and execute instructions from the instruction execution system, apparatus or device). For the purposes of this specification, a "computer-readable medium" can be any device that can contain, store, communicate, propagate or transmit a program for use by or in connection with an instruction execution system, apparatus or device. More specific examples (non-exhaustive list) of computer-readable media include the following: an electrical connection part (electronic device) with one or more wires, a portable computer disk box (magnetic device), a random access memory (RAM), a read-only memory (ROM), an erasable and editable read-only memory (EPROM or flash memory), an optical fiber device, and a portable CD-ROM. In addition, the computer-readable medium can even be paper or other suitable medium on which the program can be printed, because the program can be obtained electronically by, for example, optically scanning the paper or other medium, followed by editing, interpreting or processing in other suitable ways if necessary, and then stored in a computer memory.

It should be understood that various parts of the present disclosure can be implemented in hardware, software, firmware, or a combination thereof. In the above embodiments, a plurality of steps or methods can be implemented by software or firmware stored in a memory and executed by an appropriate instruction execution system. For example, if it is implemented by hardware, as in another embodiment, it can be implemented by any one of the following technologies known in the art or their combination: discrete logic circuits with logic gates for implementing logic functions on data signals, application specific integrated circuits with appropriate combinational logic gates, programmable gate arrays (PGA), field programmable gate arrays (FPGA), etc.

Those of ordinary skill in the art can understand that all or part of the steps carried by the method of the above embodiments can be completed by instructing related hardware through a program, which can be stored in a computer-readable storage medium, and the program, when executed, includes one or a combination of the steps of the method embodiments.

In addition, respective functional units in respective embodiments of the present disclosure can be integrated in one processing module, or each unit can exist physically alone, or two or more units can be integrated in one module. The above integrated modules can be realized in the form of hardware or software functional modules. The integrated module can also be stored in a computer-readable storage medium if it is implemented in the form of a software functional module and sold or used as an independent product.

The storage medium mentioned above can be read-only memory, magnetic disk or optical disk, etc. Although the embodiments of the present disclosure have been shown and described above, it can be understood that the above embodiments are exemplary and cannot be understood as limitations to the present disclosure and those of ordinary skill in the art can make changes, modifications, substitutions and variations to the above embodiments within the scope of the present disclosure.

## Claims

1. A photographing interface display method, comprising:
displaying (101) a first interface corresponding to a current photographing mode, wherein the first interface comprises a control area, and the control area comprises a photographing control configured to execute a photographing operation; and
in response to detecting a predetermined operation on the first interface, displaying (102) a second interface, wherein the second interface comprises the control area and a first area, and a plurality of function setting controls are displayed in the first area, the first area is adjacent to a display position of the control area on the second interface, the plurality of function setting controls are configured to adjust photographing setting items supported in a currently selected photographing mode, and the plurality of function setting controls are different along with the different currently selected photographing mode.

2. The method according to claim 1, wherein after displaying the second interface, the method further comprises:
in response to receiving a first operation on a first function setting control among the plurality of function setting controls, displaying (603) the plurality of function setting controls in the first area of the second interface, wherein the first function setting control is displayed in a display style different from that before the first operation.

3. The method according to claim 1 or 2, wherein after displaying the second interface, the method further comprises:
in response to receiving a second operation on a second function setting control among the plurality of function setting controls, displaying (703) a parameter setting item associated with the second function setting control in the first area of the second interface.

4. The method according to any of claims 1-3, wherein after displaying the second interface, the method further comprises:
in response to receiving a third operation on a third function setting control among the plurality of function setting controls, displaying (803) a plurality of target function setting controls and at least two parameter setting items associated with the third function setting control in the first area of the second interface, wherein the at least two parameter setting items are displayed in a row or column where the third function setting control is located before the third operation.

5. The method according to claim 4, wherein the plurality of target function setting controls are the same as the function setting controls at respective corresponding positions before the third operation, and the plurality of target function setting controls are inoperable.

6. The method according to any of claims 1-5, wherein the detecting a predetermined operation on the first interface comprises:
in response to detecting a predetermined sliding operation on the first interface, determining that the predetermined operation on the first interface is detected; or,
the first interface comprising an information display area in which a predetermined control is displayed, and in response to that the predetermined control is touched, determining that the predetermined operation on the first interface is detected;
wherein the information display area is configured to display an identification corresponding to a selected function in the current photographing mode.

7. The method according to any of claims 1-6, wherein a ratio of an overlapping area between the first area and a predetermined touch area to the first area is greater than a first threshold.

8. The method according to claim 7, further comprising:
acquiring a size corresponding to a display screen of an electronic device used for photographing and a current handheld state of the electronic device; and
determining the predetermined touch area based on the size and the handheld state.

9. The method according to any of claims 1-7, further comprising at least one of:
in response to detecting a first dragging operation on the first area, displaying (1103) the first area at a first dragging stop position;
in response to detecting a second dragging operation on a fourth function setting control among the plurality of function setting controls, and a corresponding second dragging stop position being in the first area, displaying (1104) the fourth function setting control at the second dragging stop position; and
in response to detecting a scaling operation on the first area, scaling (1105) the first area.

10. The method according to any of claims 1 to 9, wherein the plurality of function setting controls are displayed in the first area in a form of a grid, and each function setting control is displayed with one or more of an icon, a title and a usage parameter value corresponding to each function.

11. The method according to any of claims 1 to 9, wherein a plurality of photographing mode controls are displayed in the control area of the first interface, and the plurality of photographing mode controls are displayed in the control area of the second interface; or,
a plurality of photographing mode controls are displayed in the control area of the first interface, and the plurality of photographing mode controls are not displayed in the control area of the second interface;
wherein the plurality of photographing mode controls are adjacent to a display position of the first area on the second interface.

12. A photographing interface display apparatus (1200), comprising:
a first display module (1210) configured to display a first interface corresponding to a current photographing mode, wherein the first interface comprises a control area, and the control area comprises a photographing control configured to execute a photographing operation; and
a second display module (1220) configured to, in response to detecting a predetermined operation on the first interface, display a second interface, wherein the second interface comprises the control area and a first area, and a plurality of function setting controls are displayed in the first area, the first area is adjacent to a display position of the control area on the second interface, the plurality of function setting controls are configured to adjust photographing setting items supported in a currently selected photographing mode, and the plurality of function setting controls are different along with the different currently selected photographing mode.

13. The apparatus (1200) according to claim 12, further comprising a third processing module (1230) configured to:
in response to receiving a third operation on a third function setting control among the plurality of function setting controls, display a plurality of target function setting controls and at least two parameter setting items associated with the third function setting control in the first area of the second interface, where the at least two parameter setting items are displayed in a row or column where the third function setting control is located before the third operation.

14. The apparatus (1200) according to claim 12 or 13, wherein the plurality of target function setting controls are the same as the function setting controls at respective corresponding positions before the third operation, and the plurality of target function setting controls are inoperable.

15. A computer-readable storage medium, having stored thereon a computer program, which, when executed by a processor, implements the photographing interface display method according to any of claims 1 to 11.
